Europäisches Patentamt

European Patent Office

Office européen des brevets

(11) Numéro de publication : **0 456 553 B1**

# (12) FASCICULE DE BREVET EUROPEEN

(45) Date de publication du fascicule du brevet :
**02.03.94 Bulletin 94/09**

(51) Int. Cl.$^5$ : **G09C 5/00, H04L 9/32**

(21) Numéro de dépôt : **91401138.2**

(22) Date de dépôt : **29.04.91**

(54) **Procédé d'obtention d'une attestation en clair sécurisée dans un environnement de système informatique distribué.**

(30) Priorité : **10.05.90 FR 9005829**

(43) Date de publication de la demande :
**13.11.91 Bulletin 91/46**

(45) Mention de la délivrance du brevet :
**02.03.94 Bulletin 94/09**

(84) Etats contractants désignés :
**DE FR GB IT NL SE**

(56) Documents cités :
**US-A- 4 723 284
US-A- 4 919 545
PROCEEDINGS OF THE 7TH ANNUAL JOINT
CONFERENCE OF THE IEEE COMPUTER AND
COMMUNICATIONS SOCIETIES; NETWORKS:
EVOLUTION OR REVOLUTION?, New Orleans,
27-31 mars 1988, pages 1105-1109, IEEE, New
York, US; R. KARRI: "A security imbedded
authentication protocol"**

(56) Documents cités :
**LECTURE NOTES IN COMPUTER SIENCE,
ADVANCES IN CRYPTOLOGY - CRYPTO'87,
PROCEEDINGS, 1987, pages 9-18, Springer-
Verlag, Berlin, DE; K. PRESTTUN: "Integrating
crytography in ISDN"
PATENT ABSTRACTS OF JAPAN, vol. 10, no.
240 (E-429)[2296], 19 août 1986; & JP-A-61 72
436 (FUJITSU LTD) 14-04-1986**

(73) Titulaire : **BULL S.A.
Tour BULL, 1, place Carpeaux
F-92800 Puteaux (FR)**

(72) Inventeur : **Pinkas, Denis
13, rue du Pavé des Gardes
F-92370 Chaville (FR)**
Inventeur : **Caille, Philippe
115, rue de Novales
F-78950 Gambais (FR)**

(74) Mandataire : **Gouesmel, Daniel et al
BULL S.A., Tour BULL Cédex 74, PC/TB2803
F-92039 Paris La Défense (FR)**

EP 0 456 553 B1

**Description**

La présente invention concerne un procédé d'obtention et de transmission d'une ou plusieurs attestations en clair sécurisées par un sujet demandeur utilisant un système informatique distribué. Elle est plus particulièrement destinée à assurer la protection d'une ou plusieurs attestations attribuées à un ou plusieurs sujets utilisateurs du système lors de leur obtention et pendant leur transfert d'un sujet à l'autre.

D'une manière générale, un système informatique distribué comprend une pluralité d'ordinateurs pouvant chacun mettre en oeuvre un grand nombre de programmes d'application permettant d'accomplir des tâches variées (calcul de factures, calcul de la paie des salariés, réservations de billets de chemin de fer ou d'avion, recherche d'abonnés au téléphone, etc ...), ainsi qu' une pluralité de terminaux ou stations auxquels peuvent avoir accès directement des personnes physiques (terminaux à écran, claviers, etc ...). Les différents éléments composant un système informatique distribué (terminaux, ordinateurs) sont reliés entre eux par un réseau de transmission de données, appelé encore réseau de télécommunications, et communiquent par l'intermédiaire d'une ligne de transmission (fils téléphoniques, coaxial, bus).

D'une manière générale, les utilisateurs d'un système informatique distribué sont soit des personnes physiques, soit encore des programmes informatiques. Ses utilisateurs sont encore appelés sujets. Dans un système informatique, ces sujets ne peuvent avoir accès aux différents éléments composant le système que s'ils sont munis d'une attestation. Les attestations ainsi fournies sont personnelles, c'est-à-dire propres à chaque sujet et confèrent à celui-ci, qui en est le légitime possesseur, des droits au sein du système informatique distribué. Ainsi, par exemple, dans une entreprise, seuls les responsables de la paie des salariés peuvent avoir accès au fichier salaires de ceux-ci et effectuer la paie à la fin de chaque mois. A cet effet, l'attestation qu'ils reçoivent définit de manière explicite un droit à avoir accès à ce fichier et à pouvoir payer le personnel. Il est important que chaque attestation fournie à un sujet déterminé utilisant un système informatique ne puisse être dérobée ou obtenue par d'autres sujets. Il est donc nécessaire qu'elle soit protégée.

Dans les systèmes informatiques, l'attestation est créée sous forme d'un ensemble d'informations binaires transmissible. Il est important qu'elle puisse être transmissible directement entre différents sujets autorisés à la posséder. On doit protéger une attestation d'une part lors de son obtention (lorsqu'elle est créée, voir ci-dessous) et d'autre part lorsqu'on la transfère d'un quelconque sujet à un autre, autorisé à la posséder.

Une attestation peut être créée soit par une personne physique, soit encore plus généralement par une autorité. Ce terme doit être entendu au sens le plus large, à savoir toute personne physique ou morale (ou ses mandataires ou représentants dûment accrédités) munie d'un droit ou pouvoir de commander, de se faire obéir. Ainsi, dans une entreprise, l'autorité est le chef d'entreprise et ses mandataires ou représentants dans des domaines bien précisés d'activités de l'entreprise. Ce peut donc être par exemple le responsable du service paie des salariés. Cette autorité peut être par exemple représentée par au moins un logiciel spécial, mis en oeuvre par l'un des processeurs centraux du système informatique, ce logiciel étant appelé serveur de sécurité (security attribute server, selon la terminologie anglo-saxonne). Il convient de préciser qu'une attestation, selon la terminologie anglo-saxonne, plus spécialement utilisée par l'ECMA (European Computer Manufacturers Association) est désignée sous le sigle PAC qui signifie Privilege Attribute Certificate. Dans le langage courant des informaticiens, une attestation est également désignée sous le vocable de jeton ou de ticket.

Afin de mieux comprendre l'essence même de l'invention, il est utile d'effectuer quelques rappels faisant intervenir des notions de cryptographie.

Une information en clair, est une information binaire dont la sémantique peut être comprise par n'importe quel sujet utilisant le système informatique. En particulier, si l'un des sujets écoute la ligne de transmission par laquelle transitent les informations en clair, la connaissance du protocole d'acheminement des données, lui permet de pouvoir lire ces informations et les comprendre.

Le chiffrement est une opération de transformation d'une information en clair en une information chiffrée pour rendre celle-ci inintelligible par tout sujet qui ignore la fonction mathématique de chiffrement F et/ou la clé de chiffrement attachée à cette fonction par laquelle (par lesquelles) la transformation de l'information en clair en information chiffrée s'est effectuée.

Le déchiffrement est l'opération inverse du chiffrement, lorsque l'algorithme de chiffrement est réversible. La fonction de déchiffrement est la fonction mathématique inverse $F^{-1}$ de la fonction de chiffrement.

Divers types d'algorithmes sont utilisables pour effectuer aussi bien l'opération de chiffrement que l'opération de déchiffrement :

- les algorithmes à clé secrète, encore appelés algorithmes symétriques, ce qui signifie que l'on chiffre l'information en clair au moyen de la clé secrète (celle-ci est alors la clé de chiffrement) et que l'on déchiffre l'information chiffrée au moyen de cette même clé secrète utilisée comme clé de déchiffrement. Bien entendu, aussi bien celui qui effectue le chiffrement que celui qui effectue le déchiffrement doivent posséder en commun la même clé secrète.

- les algorithmes à clés privée/publique, encore appelés algorithmes asymétriques. Cela signifie que le chiffrement est effectué en utilisant la clé privée (ou clé publique) comme clé de chiffrement, cette clé privée étant connue du seul sujet effectuant le chiffrement, alors que le déchiffrement s'effectue en utilisant la clé publique connue de tous les sujets (ou clé privée), comme clé de déchiffrement.

Dans l'art antérieur, les algorithmes les plus connus pour effectuer les opérations de chiffrement et de déchiffrement sont les algorithmes symétriques dits DES et les algorithmes asymétriques dits RSA.

L'algorithme DES de chiffrement/déchiffrement est décrit dans le Federal Information Processing Standards Publication du 15/01/1977 par le National bureau of standards des Etats-Unis d'Amérique, DES signifiant Data Encryption Standard.

L'algorithme RSA est décrit dans le brevet américain de Rivest, Shamir et Adleman N° 4,405,829.

Il existe essentiellement deux sortes d'attestations écrites sous forme d'un ensemble d'informations binaires :

- celles dont les informations sont chiffrées,
- et celles dont les informations sont en clair.

Les attestations chiffrées sont protégées contre le vol durant leur transfert mais présentent l'inconvénient essentiel de devoir être d'abord déchiffrées par leur destinataire pour pouvoir être exploitables.

En général, les attestations en clair sont signées ou scellées.

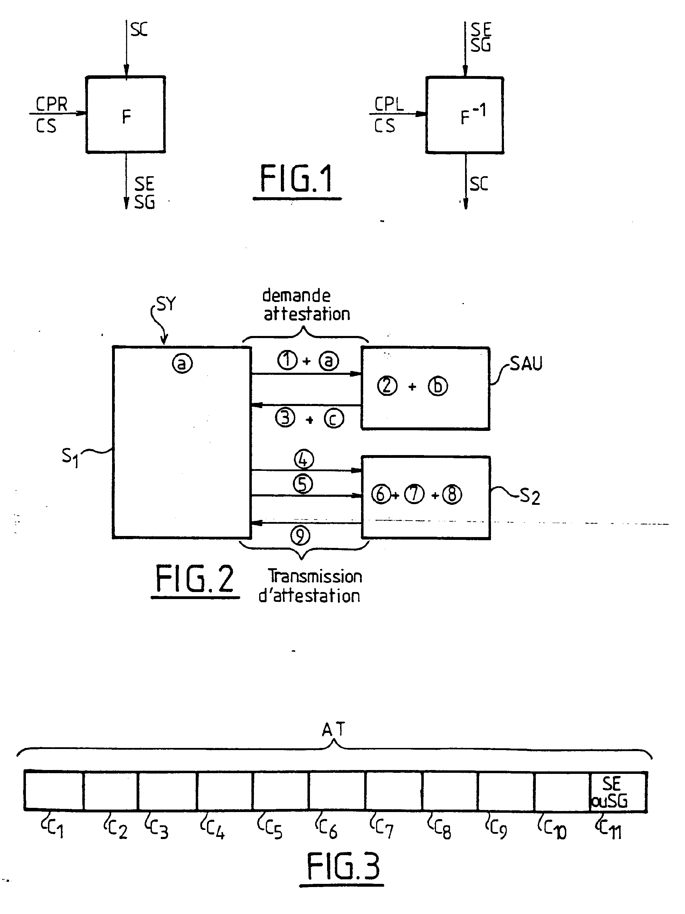

Ainsi qu'on peut le voir à la figure 1, on signe ou on scelle une attestation de la manière suivante :

En ce qui concerne la signature, on calcule d'abord une somme de contrôle sur l'ensemble des informations binaires constituant l'attestation. Cette somme de contrôle (check sum, en anglais) désignée par SC est ensuite chiffrée au moyen de la fonction mathématique F en utilisant comme clé de chiffrement la clé privée CPR, pour obtenir la signature SG. Celui qui reçoit l'attestation munie de la signature SG effectue l'opération de déchiffrement de celle-ci, en utilisant comme donnée d'entrée la signature SG et comme clé de chiffrement une clé publique CPL, la fonction de déchiffrement étant $F_{-1}$. On obtient alors en sortie la somme de contrôle SC.

En ce qui concerne le calcul du sceau, après avoir calculé la somme de contrôle SC, on utilise celle-ci comme donnée d'entrée pour l'opération de chiffrement au moyen de la fonction de chiffrement F, en utilisant comme clé de chiffrement une clé secrète CS. On obtient à la sortie le sceau SE. Celui qui reçoit l'attestation effectue l'opération de déchiffrement en utilisant ce sceau SE comme donnée d'entrée et comme clé de déchiffrement la même clé secrète CS qui avait été utilisée comme clé de chiffrement pour obtenir le sceau. On obtient en sortie à nouveau la somme de contrôle SC.

Pour effectuer une signature, on utilise un algorithme asymétrique, alors que pour effectuer le scellement on utilise un algorithme symétrique.

Dès que le destinataire de l'attestation a reçu celle-ci, il calcule une somme de contrôle SC' sur l'ensemble des informations binaires constituant l'attestation non compris la signature. Et il effectue ensuite la comparaison entre SC et SC'. Si cette comparaison est positive, cela signifie que l'ensemble des informations binaires constituant l'attestation n'a pas été modifié.

On voit donc que le scellement ou la signature consiste à ajouter une donnée de contrôle placée à la fin de l'attestation, et qui est ajoutée à l'ensemble des informations binaires qui définissent les droits du sujet possesseur de l'attestation au sein du système informatique sécurisé.

Les attestations en clair, qu'elles soient signées ou scellées, sont certes protégées contre la contrefaçon (puisque personne ne peut reproduire la signature en dehors de celui qui possède clé privée ou clé secrète et personne hormis le destinataire ne peut reproduire le sceau) mais ne sont pas protégées contre le vol durant leur transfert. Elles présentent par contre l'avantage d'être directement exploitables. Pour protéger les attestations en clair signées ou scellées durant leur transfert d'un sujet à un autre, un système complémentaire de protection est nécessaire.

On connaît déjà un système de protection complémentaire d'une attestation en clair. Un tel système a été conçu par l'ECMA qui a défini une attestation soit scellée soit signée et qui est protégée au moyen d'une valeur secrète appelée clé de validation (validation key, en anglais). Cette valeur secrète ne fait pas partie des données constituant l'attestation, mais elle est utilisée dans le calcul du sceau ou de la signature. Elle est communiquée par l'entité qui délivre l'attestation à son bénéficiaire de manière confidentielle. Le bénéficiaire (sujet détenteur de l'attestation) doit ainsi fournir cette clé à tout sujet destinataire pour permettre la vérification du sceau, ce qui prouve que l'attestation n'a pas été volée.

Selon la norme ECMA définissant ce type d'attestation (norme ECMA 138) on procède de la manière suivante pour obtenir une attestation. On se réfère donc à la figure 2.

On considère un sujet demandeur d'une attestation $S_1$, qu'on définit également comme un utilisateur du système informatique.

L'obtention de l'attestation s'effectue en trois étapes successives qui sont les suivantes :

1/ Le sujet demandeur $S_1$ adresse au serveur de sécurité SAU représentant l'autorité AU une demande d'attestation indiquant une ou plusieurs actions qu'il désire effectuer au sein du système (imprimer les feuilles de paie du personnel, par exemple) et lui communique optionnellement une donnée de protection, à savoir la clé de validation précitée. Cette clé de validation a été précédemment chiffrée par le sujet demandeur.

2/ Le serveur SAU reçoit la demande d'attestation et constitue celle-ci sous forme d'un ensemble d'informations binaires. Il calcule le sceau SE (ou la signature) en tenant compte de la clé de validation, cette dernière ayant été déchiffrée auparavant par le serveur.

3/ Le serveur SAU transmet l'attestation ainsi scellée ou signée au sujet demandeur $S_1$.

Si, lors de l'étape 1, le sujet demandeur n'a pas communiqué la donnée de protection, alors le serveur fournit également une donnée de protection chiffrée pour le sujet, dans la réponse à la demande de l'attestation.

Pour transmettre l'attestation à un sujet $S_2$, $S_1$ envoie une requête à $S_2$, décrivant les actions qu'il désire effectuer, ou faire effectuer à $S_2$. Cette requête est, comme l'attestation, scellée ou signée pour garantir son intégrité durant le transfert, mais par le sujet $S_1$ lui-même et non par une autorité. La requête ainsi établie, contient l'attestation obtenue au préalable auprès du serveur SAU, ainsi que la clé de validation chiffrée pour $S_2$. Celui-ci déchiffre la clé de validation. Il calcule la somme de contrôle sur les infos binaires de l'attestation reçue, en tenant compte de la valeur de la clé de validation. Cette somme ainsi calculée est comparée à la valeur déchiffrée du sceau ou de la signature contenu dans l'attestation.

L'inconvénient du modèle d'attestation préconisé par l'ECMA utilisant une clé de validation est de faire intervenir un élément extérieur à l'attestation et de ce fait, lors de la demande d'attestation, il est nécessaire de chiffrer la clé de validation soit lors du transfert du sujet demandeur vers le serveur lors de la demande, soit lors de la réponse du serveur vers le sujet demandeur. Ceci peut nécessiter plusieurs centaines de millisecondes de calcul, ce qui est estimé considérable dans un système informatique et donc très coûteux. De même, lors de la transmission d'une l'attestation, il est nécessaire à la réception de celle-ci de procéder d'abord à une opération de déchiffrement d'une clé, à savoir la clé de validation, pour pouvoir vérifier le sceau de l'attestation.

En conclusion la méthode préconisée par l'ECMA, quoique efficace est relativement compliquée.

C'est précisément un objet de la présente invention que de simplifier la méthode préconisée par l'ECMA. Le procédé selon l'invention s'applique à des attestations scellées ou signées et son originalité consiste à introduire dans l'attestation elle-même la donnée de protection qui va donc être en clair. Pour protéger l'attestation, selon l'invention, le détenteur de l'attestation doit prouver qu'il connait une valeur associée à la donnée de protection de manière unique. Cette valeur associée est appelée donnée de contrôle, ou encore clé de contrôle.

Selon l'invention, le procédé d'obtention d'une attestation en clair sécurisée par un sujet demandeur appartenant à un système informatique distribué comprenant une pluralité de sujets et une autorité délivrant des attestations représentée par au moins un serveur agissant en son nom, les sujets communiquant entre eux par l'intermédiaire d'un réseau, comportant les étapes successives suivantes :

1. Le sujet demandeur adresse à l'autorité une demande d'attestation et lui communique au moins une donnée de protection,

2. Le serveur constitue l'attestation sous forme d'un ensemble d'informations binaires et calcule le sceau ou la signature de l'attestation en tenant compte de la donnée de protection,

3. Le serveur transmet l'attestation scellée ou signée ainsi constituée au sujet demandeur,

est caractérisé en ce que:

a) lors de la première étape, le sujet demandeur choisit au hasard une donnée de contrôle qu'il associe et lie à la donnée de protection par une relation non inversible $F_{cp}$ puis transmet en clair à l'autorité, d'une part une information d'identification définissant la relation et d'autre part la donnée de protection,

b) lors de la seconde étape, le serveur introduit la donnée de protection et l'information d'identification dans l'attestation, puis calcule le sceau ou la signature,

c) lors de la troisième étape, l'attestation est transmise en clair au sujet demandeur,

Dans un premier exemple de réalisation préférée de l'invention, la donnée de contrôle et la donnée de protection sont liées par un mécanisme à clé publique et clé privée, la donnée de contrôle étant une clé privée et la donnée de protection une clé publique.

Dans un second exemple de réalisation préférée de l'invention, la donnée de contrôle et la donnée de protection sont liées par un système de chiffrement non inversible, la donnée de contrôle étant une clé cachée et la donnée de protection une clé révélée.

Dans une troisième forme de réalisation préférée de l'invention, on combine la première et la deuxième forme de réalisation préférée de l'invention, en introduisant une première donnée de contrôle et une première donnée de protection qui sont liées par un mécanisme à clé publique et clé privée, de la même manière que dans le premier exemple de réalisation, et une seconde donnée de contrôle et une seconde donnée de protection liées par un système de chiffrement non inversible, selon le deuxième exemple de réalisation de l'invention.

D'autres caractéristiques et avantages de la présente invention apparaîtront dans la description suivante donnée à titre d'exemple non limitatif et en se référant aux dessins annexés. Sur ces dessins :

- *La figure 1* rappelle comment s'effectuent les opérations de chiffrement et de déchiffrement selon un algorithme symétrique ou asymétrique,

- *La figure 2* est un schéma simplifié illustrant les différentes étapes du procédé selon l'invention aussi bien pour la demande d'attestation que pour la transmission de celle-ci,
- *La figure 3* montre comment est constituée une attestation obtenue par le procédé de l'invention,
- *La figure 4* montre une variante du procédé selon l'invention s'appliquant à l'obtention d'attestations en chaîne.
- *La figure 5* montre comment sont liées valeurs de chaînage et clés de contrôle dans une chaîne d'attestations.

On considère les figures 2 et 3.

Le procédé selon l'invention s'applique à des attestations scellées ou signées. Il consiste à introduire dans l'attestation elle-même une donnée de protection. Cette donnée supplémentaire est en clair tout comme le reste des informations de l'attestation, et non pas gardée confidentielle comme dans le système de protection d'attestation défini par le standard ECMA 138 précité, une autre différence étant bien entendu le fait que la donnée de protection est interne à l'attestation, au lieu d'être externe.

La figure 3 qui montre comment est constituée une attestation, permet de mieux comprendre comment se situe cette donnée de protection à l'intérieur d'une attestation.

L'attestation AT, est constituée d'une pluralité d'informations binaires réparties en une succession de champs de bits, à savoir dans l'exemple de réalisation montré à la figure 3, les champs $C_1$, $C_2$, ..., $C_5$, ..., $C_{11}$.

Chacun des champs de l'attestation a la signification suivante :

Le champ $C_1$ indique la version de syntaxe de l'attestation, (une attestation est écrite suivant une syntaxe déterminée dont il peut exister plusieurs versions successives différentes au cours du temps).

Le champ $C_2$ indique les privilèges de l'utilisateur, ou bien les droits que celui-ci possède ou non, en d'autres termes la nature des opérations qu'il est en droit ou non d'effectuer, par exemple le droit d'accès au salaire du personnel d'une entreprise pour le responsable du service de paie, ou l'interdiction de modifier les salaires pour les employés de ce même service.

Le champs $C_3$ indique les attributs de l'initiateur, c'est-à-dire ceux de celui qui le premier demande l'attestation, à savoir le sujet $S_1$ à la figure 2. Ces attributs décrivent les différentes caractéristiques du système utilisé par ce sujet. (par exemple, l'endroit où ce système est localisé, ou le type de matériel utilisé, tel que terminal avec lecteur de badge, etc, ...).

Le champ $C_4$ indique les attributs du destinataire, c'est-à-dire les caractéristiques de celui (de la même façon que pour $C_3$) auquel est destinée l'attestation, par exemple $S_2$ à la figure 2.

Le champ $C_5$ contient la donnée de protection. Cette donnée est constituée en fait de deux parties : d'une part, une clé de protection et d'autre part un identificateur de la méthode de protection utilisant la clé. Cette méthode sera précisée dans la suite de la description. La clé de protection contient un grand nombre de bits, 512 ou plus, dans un exemple de réalisation préféré de l'invention.

Le champ $C_6$ indique la date de création de l'attestation. Cette information permet de limiter l'usage de l'attestation dans le temps en combinaison avec le champ suivant $C_7$.

Le champ $C_7$ indique la période de validité de l'attestation. L'ensemble des deux champs $C_6$ et $C_7$ permet donc de préciser la période pendant laquelle, à partir de la date de création de l'attestation, l'attestation est valable.

Le champ $C_8$ contient un identificateur de l'attestation, c'est-à-dire qu'il indique le numéro de l'attestation délivrée par le serveur SAU (le serveur numérote chacune des attestations qu'il délivre)..

Le champ $C_9$ contient un identificateur de reprise, ce dernier étant utilisé pour révoquer une attestation quand cela devient nécessaire, par exemple quand l'utilisateur $S_1$ se voit retirer ses droits.

Le champ $C_{10}$ identifie l'autorité AU et éventuellement le serveur SAU correspondant qui délivre l'attestation.

Le champ $C_{11}$ contient le sceau SE ou la signature SG. Ce champ contient l'identificateur de la méthode utilisée pour calculer le sceau ou la signature SE ou SG, et la valeur du sceau SE ou de la signature SG. Rappelons que la valeur du sceau SE ou de la signature SG est calculée en déterminant la somme de contrôle (check sum, en anglais) de l'ensemble des informations binaires contenues dans les champs décrits ci-dessus à l'exception du champ $C_{11}$, à savoir les champs $C_1$ à $C_{10}$. On voit que, contrairement au modèle d'attestation préconisé par l'ECMA 138, utilisant une clé de validation extérieure à celle-ci, le calcul du sceau ou de la signature de l'attestation ne fait intervenir aucun élément qui lui est extérieur. La clé de protection étant en effet dans l'attestation elle-même, elle est prise en compte dans le calcul du sceau ou de la signature au même titre que les autres éléments de l'attestation contenue dans les autres champs.

Selon l'invention, le sujet demandeur de l'attestation, et plus généralement tout détenteur ultérieur de l'attestation doit prouver qu'il connaît une valeur associée de manière unique à la valeur de la clé de protection figurant dans l'attestation. Cette valeur associée est en fait une donnée de contrôle et est appelée clé de contrôle. Il existe une relation $F_{cp}$ entre la clé de contrôle et la clé de protection qui est indiquée par l'identificateur de la méthode à utiliser pour vérifier la clé de protection, identificateur contenu dans le champ $C_5$, avec la clé de protection.

Si l'on désigne par CP, et par CL respectivement la clé de protection et la clé de contrôle, il existe entre elles la relation suivante :

$$CP = F_{cp}(CL),$$

La clé de contrôle CL peut être de deux sortes :

1) Dans le cas d'un mécanisme à clé publique et clé privée, elle peut être une clé privée CPR, la clé privée étant alors reliée à la clé publique CPL par la relation :

$$CPL = F_{cp}(CPR),$$

où $F_{cp}$ est une relation entre la clé publique et la clé privée telle que connaissant la clé publique et la fonction $F_{cp}$ (qui sont indiquées dans le champ $C_5$ de l'attestation, en clair), il est difficile de trouver la clé privée dans un temps raisonnable, et ce d'autant plus que la clé publique CPL contient, ainsi qu'il a été indiqué plus haut, un grand nombre de bits, 512 ou plus. Ceci est en effet une caractéristique fondamentale des fonctions mathématiques qui associent, selon la pratique courante, les clés privées aux clés publiques. Ainsi, pour un ordinateur extrêmement puissant, de la catégorie des super ordinateurs, il faudrait plusieurs années pour retrouver la clé privée CPR associée à la clé publique, à partir de la connaissance de la clé publique CPL et de la fonction $F_{cp}$.

2) Dans le cadre d'un système de chiffrement non réversible, la clé de contrôle peut être une clé cachée CCH, la clé publique dite clé révélée CRV étant alors liée à la clé cachée par la relation CRV $= F_{cp}(CCH)$.

La fonction $F_{cp}$ étant une fonction de chiffrement non inversible (one way function, en anglais), il est difficile de trouver la clé cachée CCH dans un temps raisonnable (voir ci-dessus), lorsque l'on connaît la clé révélée CRV et la fonction $F_{cp}$.

Il est envisageable également de protéger une attestation par la combinaison des deux techniques mentionnées ci-dessus, à savoir que la clé de contrôle qui est soit une clé publique soit une clé révélée est associée soit à une clé privée soit à une clé cachée. Dans ce cas, le champ $C_5$ contient alors une première clé de protection dite clé publique CPL, et une seconde clé de protection dite clé révélée CRV, chacune associée à un indicateur spécifiant la méthode de protection correspondante, c'est-à-dire soit le mécanisme à clé publique et clé privée, soit le système de chiffrement non inversible. On peut donc dire en conclusion de ce qui précède que la possession d'une attestation se caractérise par la possession, d'une clé privée et/ou la possession d'une clé cachée.

La caractéristique essentielle du procédé selon l'invention venant d'être précisée ci-dessus, il importe désormais de préciser quelles sont les différentes étapes du procédé d'obtention de l'attestation selon l'invention. Ce procédé comporte, de la même manière que le procédé défini par le standard ECMA 138 trois étapes analogues à celles définies par celui-ci, ces trois étapes comportant chacune des opérations supplémentaires, à savoir a, b, c pour respectivement les première, deuxième et troisième étapes, comme il est indiqué ci-dessous :

a) (on se réfère à la figure 2). Lors de cette première étape, le sujet demandeur $S_1$ choisit au moins une clé de contrôle, qu'il associe et lie à la clé de protection par la relation non inversible $F_{cp}$, puis il transmet en clair à l'autorité d'une part une information d'identification définissant la relation $F_{cp}$ et d'autre part la clé de protection.

Si la clé de contrôle est une clé cachée CCH, le sujet $S_1$ détermine celle-ci en choisissant au hasard un grand nombre binaire. Il calcule alors la clé de protection, c'est-à-dire la clé révélée, en appliquant la formule :

$$CRV = F_{cp}(CCH).$$

Il communique ensuite à l'autorité la valeur de cette clé de protection sans la chiffrer.

Si l'on utilise une clé privée comme clé de contrôle, le sujet $S_1$ qui demande l'attestation choisit au hasard un couple clé publique/clé privée CPL/CPR. Il communique alors au serveur SAU la valeur de la clé publique CPL sans la chiffrer.

Dans le cas de l'utilisation combinée des deux techniques précédentes, clé cachée ou clé privée, le sujet $S_1$ choisit au hasard d'une part un grand nombre binaire qui va être la clé cachée CCH et d'autre part un couple clé publique/clé privée CPL/CPR. Il calcule alors la clé révélée CRV correspondant à la clé cachée par la formule :

$$CRV = F_{cp}(CCH).$$

Il communique ensuite au serveur SAU qui délivre l'attestation, la valeur de la clé révélée CRV ainsi que la valeur de la clé publique CPL sans les chiffrer.

b) Lors de la seconde étape, le serveur SAU introduit la clé de protection et l'information d'identification définissant la méthode à utiliser pour vérifier la clé de protection, au sein même de l'attestation, puis calcule le sceau SE ou la signature SG en tenant compte de celles-ci.

Dans le cas où l'on utilise une clé cachée CCH comme clé de contrôle, l'autorité délivrant l'attestation introduit la clé révélée CRV et l'identificateur de la relation $F_{cp}$ dans l'attestation et calcule le sceau ou la signature en tenant compte de la clé révélée CRV et de son identificateur.

Si l'on utilise comme clé de contrôle une clé privée CPR, le serveur SAU introduit la clé publique CPL qu'il a reçu du sujet $S_1$ dans l'attestation ainsi que l'identificateur correspondant, et calcule le sceau SE ou la signature SG en tenant compte de la clé publique CPL et de l'identificateur.

c) Lors de la troisième étape, l'attestation est transmise en clair par le serveur SAU au sujet demandeur. (Ceci est vrai quelle que soit la technique utilisée, première, seconde ou combinaison de celles-ci). On voit ainsi que par rapport à la méthode définie par le standard ECMA 138, la clé de protection, ici incluse dans l'attestation est transmise en clair aussi bien du sujet demandeur au serveur que du serveur au sujet demandeur. Le procédé selon l'invention évite donc de ce fait un chiffrement de clé.

Dans le cas où on utilise la combinaison de deux techniques (voir plus haut) l'autorité lors de cette troisième étape, ayant constitué l'attestation, envoie celle-ci en clair au sujet demandeur $S_1$. La clé publique et la clé privée sont donc transmises en clair à l'intérieur de l'attestation non seulement du sujet demandeur à l'autorité mais également dans le sens inverse.

On considère désormais le problème de la transmission d'une attestation depuis le sujet $S_1$ bénéficiaire d'une attestation à un destinataire de l'attestation, tel que le sujet $S_2$, qui peut être soit un individu soit un programme d'application pouvant mener à bien des tâches précises pour le compte du sujet demandeur $S_1$.

La transmission de l'attestation se déroule selon les étapes suivantes :

4. Le bénéficiaire de l'attestation $S_1$ prépare une requête pour le sujet destinataire qui est appelé encore sujet tiers, ou plus simplement tiers, à savoir $S_2$.

Suite à l'opération 4 le sujet $S_1$ accomplit ensuite soit les opérations 5 à 7, soit les opérations 8 à 13, suivant que la clé de contrôle est une clé privée ou que la clé de contrôle est une clé cachée.

5. Si la clé de contrôle est une clé privée CPR, le sujet bénéficiaire de l'attestation $S_1$ constitue un message formé par la requête élaborée lors de l'opération 4 et l'attestation en clair. Ce message précise l'usage qui peut être fait de l'attestation, c'est-à-dire définit les tâches que devra accomplir le sujet $S_2$. $S_1$ signe ce message au moyen de la clé privée, grâce à un algorithme asymétrique, puis l'envoie à $S_2$.

6. Le sujet tiers $S_2$ qui dispose de la clé publique CPL transmise au sein de l'attestation, vérifie la signature du message qui lui a été transmis.

7. Le sujet $S_2$ prend en compte l'attestation qui lui a été transmise par le sujet $S_1$ dans le cas où la vérification s'avère positive. Le sujet $S_2$ informe alors le bénéficiaire de l'attestation $S_1$ qu'il prend en compte son attestation puisque ce dernier lui a réellement prouvé qu'il possède la clé privée.

8. Si la clé de contrôle est une clé cachée CCH, le bénéficiaire $S_1$ constitue un message formé par la requête élaborée en 4 et l'attestation en clair. Le message définit les tâches que devra accomplir $S_2$. $S_1$ scelle ce message au moyen de la clé cachée, grâce à un algorithme symétrique, puis l'envoie à $S_2$.

9. Le bénéficiaire $S_1$ effectue une opération de chiffrement sur la clé cachée CCH (avec une fonction quelconque différente de $F_{cp}$) et la transmet ainsi de manière confidentielle au tiers $S_2$.

10. Le tiers ayant reçu cette clé cachée chiffrée, la déchiffre.

11. Il calcule la clé de protection à partir de la clé cachée ainsi déchiffrée lors de l'opération 10 et de la fonction de chiffrement irréversible $F_{cp}$, et calcule le scellement sur le message reçu.

12. Il compare la clé de protection ainsi calculée avec la valeur de la clé de protection qui lui est transmise au sein même de l'attestation, lors de l'opération 8 et vérifie si le scellement est correct.

13. Il prend en compte l'attestation lorsque la clé de protection calculée et la clé de protection transmise sont égales et si le scellement calculé sur le message reçu est correct, ce qui prouve que le bénéficiaire $S_1$ de l'attestation est en possession de la clé de contrôle.

Lorsque l'on combine l'utilisation des deux techniques mécanisme à clé privée/clé publique et fonction de chiffrement irréversible, la transmission de l'attestation s'effectue de la manière suivante :

Le bénéficiaire $S_1$ émet le message selon la méthode décrite lors des opérations 4 et 5 en ajoutant dans l'attestation une clé révélée CRV. Le sujet tiers reçoit ainsi une attestation comprenant à la fois une clé publique et une clé révélée.

$S_2$ reçoit donc un message signé et parallèlement reçoit la clé cachée CCH chiffrée par $S_1$ dans un opération analogue à 9.

$S_2$ doit donc effectuer deux vérifications :

a) vérifier que la signature est bonne (analogue à opération 6),

b) vérifier que la clé cachée chiffrée correspond à la clé révélée (analogue à opérations 10, 11, 12).

La prise en compte de l'attestation est faite par $S_2$ si ces deux vérifications sont positives.

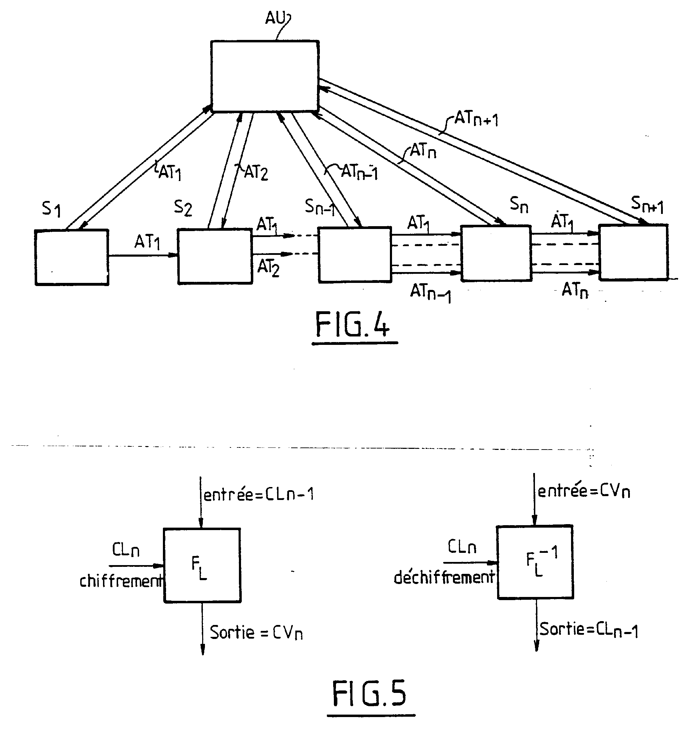

Dans certains cas, il peut être nécessaire de présenter simultanément à un même sujet tiers quelconque plusieurs attestations différentes $AT_1$ à $AT_n$ (voir figure 4). Ceci se produit en particulier lorsque surgit le scénario suivant : celui qui reçoit une requête pour effectuer une tâche déterminée, par exemple le sujet $S_2$ n'est pas nécessairement en mesure d'y répondre, c'est-à-dire d'accomplir dans son intégralité la tâche qui lui est demandée par le bénéficiaire de l'attestation $S_1$. Dans ce cas, le sujet tiers $S_2$ transmet la requête à une tierce partie, par exemple le sujet $S_3$. Cette tierce partie peut exiger la présentation de deux attestations, à savoir l'attestation $AT_1$ du premier requé-

rant, c'est-à-dire le premier bénéficiaire $S_1$ ainsi que l'attestation $AT_2$ du second requérant, c'est-à-dire du sujet $S_2$. Celui-ci aura demandé cette dernière à l'autorité AU (représentée éventuellement par un autre serveur que SAU) selon un scénario strictement identique à celui qui a été utilisé pour la demande d'attestation $AT_1$ par le sujet $S_1$ et qui est décrite ci-dessus.

Avec la méthode préconisée ci-dessus, cela nécessiterait le doublement des mécanismes présentés, chiffrement des données de contrôle ou constitution de messages signés, déchiffrement, opération de calcul des sommes de vérification, etc. Cependant, lorsque la chaîne des requérants $S_1$, $S_2$, $S_3$, ..., $S_i$, ..., $S_{n-1}$, $S_n$ est relativement importante et contient n-1 intermédiaires, il peut être intéressant de simplifier le mécanisme d'obtention et de transmission des attestations.

Dans ce cas, les attestations sont liées entre elles de telle sorte que chaque nouvelle attestation $AT_n$ puisse être chaînée avec la précédente attestation $AT_{n-1}$. On obtient ainsi une chaîne d'attestations $AT_1 ... AT_n$. Ce mécanisme de chaînage a les propriétés suivantes :

- le dernier détenteur $S_n$ de la chaîne d'attestation dispose de l'ensemble des attestations contenues dans la chaîne, à savoir $AT_1$ à $AT_n$,
- un détenteur intermédiaire d'attestation $S_i$, qui dispose de l'ensemble des attestations qu'il a reçues $AT_1$, ..., $AT_i$, ne peut en aucun cas disposer des attestations qui seront éventuellement rajoutées par la suite à la chaîne des attestations déjà présentes, par d'autres que lui-même. En d'autres termes, il ne pourra en aucun cas disposer des attestations $AT_{i+1}$, $AT_{i+2}$, etc.

Ce mécanisme de chaînage nécessite l'adjonction d'une valeur complémentaire, dans chaque attestation $AT_1$ à $AT_n$, appelée valeur de chaînage CV (chaining value, en anglais). Cette valeur de chaînage CV n'est pas nécessaire lorsque la chaîne ne contient qu'une seule attestation, à savoir $AT_1$ (mécanisme décrit ci-dessus) mais est nécessaire dès lors qu'une seconde attestation $AT_2$ est chaînée à la première.

La valeur de chaînage lie les clés de contrôle des différentes attestations entre elles. Si l'on appelle clé de contrôle $CL_n$, la clé de contrôle attachée à l'attestation $AT_n$ de rang n, et clé de contrôle $CL_{n-1}$, la clé de contrôle attachée à l'attestation $AT_{n-1}$ de rang n-1 et $CV_n$, la valeur de chaînage de rang n, on a alors la relation de liaison $F_L$ entre la valeur de chaînage $CV_n$ et ses deux clés de contrôle $CL_n$ et $CL_{n-1}$ qui est la suivante:

$$CV_n = F_L (CL_n, CL_{n-1})$$

$F_L$ est une fonction de chiffrement réversible utilisant la clé de contrôle $CL_n$ comme clé de chiffrement, et la clé de contrôle $CL_{n-1}$ comme entrée (voir figure 5). La fonction $F_L$ permet de calculer toutes les valeurs de chaînage et est éventuellement identique pour toutes les opérations de calcul de l'ensemble des valeurs de chaînage. Elle peut être choisie par le premier sujet $S_1$ et sera utilisée par l'ensemble des autres sujets pour calculer les valeurs de chaînage. Cette fonction de chiffrement est donc choisie arbitrairement et est accomplie au moyen de circuits logiques ou de programmes parfaitement connus selon l'art antérieur.

La propriété de réversibilité de la fonction $F_L$ se traduit par le fait que connaissant la clé de contrôle $CL_n$ et la valeur de chaînage $CV_n$, il est possible d'en déduire la clé de contrôle $CL_{n-1}$ par la relation suivante :

$$CL_{n-1} = F_L^{-1} (CL_n, CV_n),$$

$F_L^{-1}$ étant la fonction de déchiffrement correspondant à la fonction de chiffrement $F_L$ et qui utilise la clé de contrôle $CL_n$ comme de clé de déchiffrement et la valeur de chaînage $CV_n$ comme entrée (voir également figure 5).

Le procédé de transmission d'une chaîne d'attestations présente les caractéristiques suivantes :

I - Pour transmettre un ensemble d'attestations $AT_1$ à $AT_n$, il n'est plus nécessaire de chiffrer individuellement chaque clé de contrôle associée à chaque attestation, mais de chiffrer seulement la dernière clé de contrôle, c'est-à-dire $CL_n$ de telle sorte que le destinataire $S_{n+1}$ puisse la déchiffrer. $S_n$ n'a alors qu'à effectuer que deux opérations de chiffrement pour transmettre et rajouter une attestation à la chaîne au lieu d'autant d'opérations individuelles de chiffrement que d'attestations à transmettre n. Le sujet tiers $S_n$ va donc d'une part chiffrer la dernière clé de contrôle $CL_n$, mais va également calculer la bonne valeur de chaînage, c'est-à-dire va effectuer l'opération $CV_n = F_L (CL_n, CL_{n-1})$ où la clé de contrôle $CL_{n-1}$ lui est transmise chiffrée par le sujet $S_{n-1}$ ($S_n$ va donc la déchiffrer), la clé de contrôle $CL_n$ étant choisie par $S_n$ lui-même.

II - Pour vérifier un ensemble d'attestations, il n'est plus nécessaire de déchiffrer individuellement chaque clé de contrôle associée à chaque attestation mais de déchiffrer seulement la dernière clé de contrôle. Il convient alors de calculer les autres clés de contrôle au moyen des valeurs de chaînage selon la formule :

$$CL_{n-1} = F_L^{-1} (CL_n, CV_n)$$ citée ci-dessus.

Un intermédiaire de rang n dans la chaîne a donc à effectuer d'abord une opération de déchiffrement de la dernière clé de contrôle puis n-1 opérations de déchiffrement pour retrouver les différentes valeurs de toutes les clés de contrôle : ceci constitue un total de n opérations identiques ou n opérations individuelles de déchiffrement des clés de contrôle selon la méthode classique n'utilisant pas les valeurs de chaînage.

On voit que le procédé selon l'invention permettant de transmettre un ensemble d'attestations au moyen des valeurs de chaînage $CV_n$ permet d'économiser un grand nombre d'opérations, essentiellement lors de la transmission de l'ensemble des attestations.

En outre, le procédé de transmission d'une chaîne d'attestations selon l'invention contient un certain nombre de particularités qui sont les suivantes :

- Il n'est pas possible de supprimer ou de remplacer les premières attestations d'une chaîne et de garder les suivantes.
- Il n'est pas possible à un intermédiaire de rang n de pouvoir bénéficier de l'usage d'une attestation $AT_{n+1}$ de rang n+1.
- Il est possible de raccourcir la chaîne des attestations en supprimant les n dernières attestations $AT_1 ... AT_{n-1}$, mais sans pouvoir changer l'ordre des attestations restantes.

## Revendications

1. Procédé d'obtention d'au moins une attestation en clair (AT) sécurisée par au moins un sujet demandeur ($S_1$) appartenant à un système informatique (SY) comprenant une pluralité de sujets et une autorité (AU) représentée par au moins un serveur (SAU) agisssant en son nom et délivrant des attestations, les sujets communiquant entre eux par l'intermédiaire d'un réseau, comportant les étapes successives suivantes :
   - 1°) Le sujet demandeur (S1) adresse à l'autorité (AU) une demande d'attestation et lui communique au moins une donnée de protection (CP),
   - 2°) Le serveur (SAU) constitue l'attestation (AT) sous forme d'un ensemble d'informations binaires et calcule le sceau (SE) ou la signature (SG) de l'attestation (AT ) en tenant compte de la première donnée de protection (CP),
   - 3°) Le serveur transmet l'attestation scellée ou signée ainsi constituée (AT) au sujet demandeur ($S_1$) caractérisé en ce que :
      a) lors de la première étape, le sujet demandeur ($S_1$) choisit au hasard une donnée de contrôle (CL) qu'il associe et lie à la donnée de protection (CP) par une relation non inversible ($F_{cp}$) puis transmet en clair à l'autorité (AU), d'une part une information d'identification définissant la relation et d'autre part la donnée de protection (CP) elle-même,
      b) lors de la seconde étape, le serveur introduit la donnée de protection (CP) et l'information d'identification dans l'attestation (AT) puis calcule le sceau (SE) ou la signature (SG),
      c) lors de la troisième étape, ce dernier transmet l'attestation (AT) en clair au sujet demandeur ($S_1$).

2. Procédé selon la revendication 1 caractérisé en ce que la donnée de contrôle (CL) et la donnée de protection (CP) sont liées par un mécanisme à clé publique/clé privée, la donnée de contrôle (CL) étant une clé privée (CPR) et la donnée de protection (CP) une clé publique (CPL).

3. Procédé selon la revendication 1 caractérisé en ce que la donnée de contrôle (CL) et la donnée de protection (CP) sont liées par un système de chiffrement non inversible, la donnée de contrôle étant une clé cachée (CCH) et la donnée de protection une clé révélée (CRV), la relation non inversible ($F_{cp}$) étant une fonction de chiffrement non réversible.

4. Procédé selon la revendication 1 caractérisé en ce que l'attestation (AT) comprend une première et une seconde donnée de protection, auxquelles sont associées une première donnée de contrôle et une seconde donnée de contrôle, la première donnée de contrôle et la première donnée de protection étant liée par un mécanisme à clé publique et clé privée, la première donnée de contrôle étant une clé privée (CPR) et la première donnée de protection une clé publique (CPL), la seconde donnée de contrôle étant une clé cachée (CCH) et la seconde donnée de protection une clé révélée (CRV), la relation non inversible ($F_{cp}$) entre ces deux dernières étant une fonction de chiffrement non inversible.

5. Procédé selon la revendication 2 caractérisée en ce que, pour transmettre l'attestation depuis un sujet bénéficiaire ($S_1$) de celle-ci à un sujet tiers ($S_2$),
   - 4°) Le bénéficiaire ($S_1$) prépare une requête pour le sujet tiers ($S_2$),
   - 5°) Il constitue un message comprenant la requête et l'attestation (AT) en clair, précisant l'usage qui peut être fait de celle-ci et signe ce message au moyen de la clé privée (CPR), et le transmet à ($S_2$),
   - 6°) Le tiers vérifie la signature du message transmis,
   - 7°) Il prend en compte l'attestation (AT) au cas où la vérification est positive.

6. Procédé selon la revendication 3, caractérisé en ce que, pour transmettre l'attestation d'un bénéficiaire ($S_1$) à un tiers ($S_2$),
   - 4°) Le bénéficiaire ($S_1$) prépare une requête pour le sujet tiers ($S_2$),
   - 8°) Le bénéficiaire ($S_1$) constitue un message formé par cette requête et l'attestation (AT) en clair, précisant l'usage qui peut être fait de celle-ci, scelle ce message au moyen de la clé cachée (CCH), et le transmet à (S₂),

- 9°) Il chiffre la donnée de contrôle (clé cachée CCH) et la transmet au tiers,
- 10°) Ce dernier déchiffre la donnée de contrôle (CCH),
- 11°) Il calcule la donnée de protection correspondante à partir de la donnée de contrôle (clé cachée CCH) et de la fonction de chiffrement irréversible $F_{cp}$ et calcule le scellement sur le message reçu.
- 12°) Il compare la donnée de protection ainsi calculée avec la valeur de la donnée de protection transmise directement au sein même de l'attestation (AT) et vérifie si le scellement calculé est correct,
- 13°) Il prend en compte l'attestation lorsque la comparaison entre la donnée de protection transmise et la donnée de protection calculée est positive, et si le scellement calculé est correct.

7. Procédé selon les revendications 5, 6 dans lequel une pluralité n de sujets demandeurs ($S_1$, $S_i$, $S_n$) demandent chacun une attestation ($AT_n$) au serveur (SAU), n attestations étant transmises à un sujet tiers ($S_{n+1}$), caractérisé en ce que :

- lors de la première étape, ayant choisi sa propre donnée de contrôle ($CL_n$) et reçu du sujet $S_{n-1}$, la précédente donnée de contrôle ($CL_{n-1}$), le sujet $S_n$ calcule une valeur de chaînage ($CV_n$) liée à sa propre donnée de contrôle ($CL_n$) et à la précédente ($CL_{n-1}$) par une fonction de chiffrement $F_L$ réversible utilisant sa propre donnée de contrôle comme clé de chiffrement et la précédente comme valeur d'entrée, puis la transmet au serveur (SAU),
- lors de la seconde étape, le serveur introduit en plus la valeur de chaînage ($CV_n$) dans l'attestation, le calcul du sceau ou de la signature prenant également en compte cette dernière.

8. Procédé selon la revendication 7, caractérisé en ce que, pour vérifier un ensemble de n attestations, le sujet de rang n, $S_n$ déchiffre la dernière donnée de contrôle $CL_{n-1}$ puis calcule les autres données de contrôle de la chaîne d'attestations au moyen des valeurs de chaînage, et de la fonction de déchiffrement inverse de la dite fonction de chiffrement réversible.

**Claims**

1. A process for obtaining at least one plain-language certificate (AT) made secure by at least one requester subject ($S_1$) belonging to an information processing system (SY) comprising a plurality of subjects and an authority (AU) represented by at least one server (SAU) acting in its own name and supplying certificates, the subjects communicating among themselves through the intermediary of a network, comprising the following successive stages:

- 1) The requester subject ($S_1$) sends the authority (AU) a request for a certificate and communicates to it at least one protection datum (CP),
- 2) The server (SAU) constitutes the certificate (AT) in the form of a set of binary signals and calculates the seal (SE) or the signature (SG) of the certificate (AT) while taking account of the first protection datum (CP).
- 3) The server transmits the sealed or signed certificate thus constituted (AT) to the requester subject ($S_1$)

characterised in that:

a) at the first stage, the requester subject ($S_1$) chooses at random a check datum (CL) which he associates with and links to the protection datum (CP) by a one-way relationship ($F_{cp}$) then transmits in plain language to the authority (AU), on the one hand, an identification signal defining the relationship and, on the other hand, the protection datum (CP) itself.

b) at the second stage, the server inserts the protection datum (CP) and the identification signal into the certificate (AT) and then calculates the seal (SE) or the signature (SG),

c) at the third stage, the latter transmits the certificate (AT) in plain language to the requester subject ($S_1$).

2. A process according to Claim 1, characterised in that the check datum (CL) and the protection datum (CP) are linked by a public-key/private-key mechanism, the check datum (CL) being a private key (CPR) and the protection datum (CP) a public key (CPL).

3. A process according to Claim 1, characterised in that the check datum (CL) and the protection datum (CP) are linked by a one-way coding system, the check datum being a hidden key (CCH) and the protection datum a revealed key (CRV), the one-way relationship ($F_{cp}$) being a function of non-reversible coding.

4. A process according to Claim 1, characterised in that the certificate (AT) comprises a first and a second protection datum, with which there are associated a first check datum and a second check datum, the first check datum and the first protection datum being linked by a public-key/private-key mechanism, the first check datum being a private key (CPR) and the first protection datum a public key (CPL), the second check datum being a hidden key (CCH) and the second protection datum a revealed key (CRV), the one-way relationship ($F_{cp}$) between these two latter being a function of one-way coding.

5. A process according to Claim 2, characterised in that, to transmit the certificate from a subject ($S_1$) benefiting from the latter to a third subject ($S_2$):

- 4) the beneficiary ($S_1$) prepares a request for the third subject ($S_2$),
- 5) he constitutes a message comprising the request and the certificate (AT) in plain language, specifying the use which may be made of the latter and signs this message by means of the private key (CPR), and transmits it to ($S_2$),
- 6) the third person verifies the signature of the message transmitted,
- 7) he takes account of the certificate (AT) in the event that verification is positive.

6. A process according to Claim 3, characterised in that, to transmit the certificate from a beneficiary ($S_1$) to a third person ($S_2$),

- 4) the beneficiary ($S_1$) prepares a request for the third subject ($S_2$),
- 8) the beneficiary ($S_1$) constitutes a message formed by this request and the certificate (AT) in plain language, specifying the use which may be made of the latter, seals this message by means of the hidden key (CCH), and transmits it to ($S_2$),
- 9) he encodes the check datum (hidden key CCH) and transmits it to the third person,
- 10) the latter decodes the check datum (CCH),
- 11) he calculates the corresponding protection datum on the basis of the check datum (hidden key CCH) and of the irreversible encryption function $F_{cp}$ and calculates the sealing on the message received,
- 12) he compares the protection datum thus calculated with the value of the protection datum transmitted direct, within the actual certificate (AT), and verifies whether the calculated sealing is correct,
- 13) he takes account of the certificate when the comparison between the transmitted protection datum and the calculated protection datum is positive, and if the calculated sealing is correct.

7. A process according to Claims 5 or 6 in which a plurality n of requester subjects ($S_1$, $S_i$, $S_n$) each request a certificate ($AT_n$) from the server (SAU), n certificates being transmitted to a third subject ($S_{n+1}$), characterised in that:

- at the first stage, having chosen his own check datum ($CL_n$) and received from the subject $S_{n-1}$ the preceding check datum ($CL_{n-1}$), the subject $S_n$ calculates a chaining value ($CV_n$) linked to his own check datum ($CL_n$) and to the preceding one ($CL_{n-1}$) by a reversible encryption function $F_L$ using his own check datum as an encoding key and the preceding one as an input value, then transmits it to the server (SAU),
- at the second stage, the server further inserts the chaining value (CVn) into the certificate, the calculation of the seal or the signature also taking account of the latter.

8. A process according to Claim 7, characterised in that, to verify a set of n certificates, the subject with the rank n, $S_n$, decodes the last check datum $CL_{n-1}$, then calculates the other check data in the chain of certificates by means of the chaining values, and the inverse decoding function of said reversible decoding function.

**Patentansprüche**

1. Verfahren zur Erlangung wenigstens einer gesicherten Klarbeglaubigung (AT) durch wenigstens ein Antragstellersubjekt ($S_1$), das einem Informationssystem (SY) angehört, das mehrere Subjekte und eine durch wenigstens einen Server (SAU) repräsentierte Autorität (AU) enthält, die in seinem Namen handelt und Beglaubigungen liefert, wobei die Subjekte untereinander über ein Netz miteinander in Verbindung stehen, enthaltend folgende aufeinanderfolgende Stufen:

- 1) Das Antragstellersubjekt ($S_1$) richtet an die Autorität (AU) eine Beglaubigungsanforderung und überträgt zu ihr wenigstens einen Schutzdatenwert (CP),
- 2) der Server (SAU) bildet die Beglaubigung (AT) in Form einer Gruppe binärer Informationen und berechnet das Siegel (SE) oder die Unterschrift (SG) der Beglaubigung (AT) unter Berücksichtigung des ersten Schutzdatenwerts (CP),
- 3) der Server überträgt die auf diese Weise gebildete gesiegelte oder unterschriebene Beglaubigung (AT) zum Antragstellersubjekt ($S_1$),

dadurch gekennzeichnet, daß

a) bei der ersten Stufe das Antragstellersubjekt ($S_1$) auf Zufallsbasis einen Steuerdatenwert (CL) auswählt, den es durch eine nicht umkehrbare Beziehung ($F_{cp}$) dem Schutzdatenwert (CP) zuordnet und mit diesem verbindet und dann in Klarform zu der Autorität (AU) einerseits eine die Beziehung definierende Identifizierungsinformation und andererseits den Schutzdatenwert (CP) selbst überträgt,

b) bei der zweiten Stufe der Server den Schutzdatenwert (CP) und die Identifizierungsinformation in die Beglaubigung (AT) überträgt und dann das Siegel (SE) oder die Unterschrift (SG) berechnet,

c) bei der dritten Stufe letzterer die Beglaubigung (AT) in Klarform zum Antragstellersubjekt ($S_1$) überträgt.

2. Verfahren nach Anspruch 1, dadurch gekennzeichnet, daß der Steuerdatenwert (CL) und der Schutzdatenwert (CP) durch einen Mechanismus mit öffentlichem/privatem Schlüssel miteinander verbunden sind, wobei derder Steuerdatenwert (CL) ein privater Schlüssel (CPR) ist und der Schutzdatenwert (CP) ein öffentlicher Schlüssel (CPL) ist.

3. Verfahren nach Anspruch 1, dadurch gekennzeichnet, daß der Steuerdatenwert (CL) und der Schutzdatenwert (CP) durch ein nicht umkehrbares Chiffriersystem miteinander verbunden sind, wobei der Steuerdatenwert ein verdeckter Schlüssel und der Schutzdatenwert ein offener Schlüssel (CRV) ist und die nicht umkehrbare Beziehung ($F_{cp}$) eine nicht umkehrbare Chiffrierfunktion ist.

4. Verfahren nach Anspruch 1, dadurch gekennzeichnet, daß die Beglaubigung (AT) einen ersten und einen zweiten Schutzdatenwert aufweist, denen ein erster Steuerdatenwert und ein zweiter Steuerdatenwert zugeordnet sind, wobei der erste Steuerdatenwert und der erste Schutzdatenwert durch einen Mechanismus mit öffentlichem Schlüssel und mit privatem Schüssel verbunden sind, der erste Steuerdatenwert ein privater Schlüssel (CPR) und der erste Schutzdatenwert ein öffentlicher Schlüssel (CPL) sind, der zweite Steuerdatenwert ein verdeckter Schlüssel (CCH) und der zweite Schutzdatenwert ein offener Schlüssel (CRV) sind und die nicht umkehrbare Beziehung ($F_{cp}$) zwischen den beiden letzteren eine nicht umkehrbare Chiffrierfunktion ist.

5. Verfahren nach Anspruch 2, dadurch gekennzeichnet, daß zum Übertragen der Beglaubigung von einem begünstigten Subjekt ($S_1$)

- 4) der Begünstigte ($S_1$) ein Gesuch an das dritte Subjekt ($S_2$) richtet,

- 5) er eine Nachricht erzeugt, die das Gesuch und die Beglaubigung (AT) in Klarform enthält und den Gebrauch präzisiert, der von dieser gemacht werden kann, und diese Nachricht mit Hilfe des privaten Schlüssels (CPR) unterschreibt und zu ($S_2$) überträgt,

- 6) er Dritte die Unterschrift der übertragenen Nachricht verifiziert,

- 7) er die Beglaubigung (AT) akzeptiert, falls die Verifizierung positiv ist.

6. Verfahren nach Anspruch 3, dadurch gekennzeichnet, daß zum Übertragen der Beglaubigung von einem Begünstigten ($S_1$) zu einem Dritten ($S_2$)

- 4) der Begünstigte ($S_1$) ein Gesuch für das dritte Subjekt ($S_2$) erzeugt,

- 8) der Begünstigte ($S_1$) eine Nachricht erzeugt, die durch dieses Gesuch und die Beglaubigung (AT) in Klarform gebildet ist und den Gebrauch präzisiert, der von dieser gemacht werden kann, diese Nachricht mittels des verdeckten Schlüssels (CCH) siegelt und zu ($S_2$) überträgt,

- 9) er den Steuerdatenwert (verdeckter Schlüssel CCH) chiffriert und zu dem Dritten überträgt,

- 10) letzterer den Steuerdatenwert (CCH) dechiffriert,

- 11) er den entsprechenden Schutzdatenwert aus dem Steuerdatenwert (verdeckter Schlüssel CCH) und aus der nicht umkehrbaren Chiffrierfunktion $F_{cp}$ berechnet und das Siegel für die empfangene Nachricht berechnet,

- 12) er den auf diese Weise berechneten Schutzdatenwert mit dem im Inneren der Beglaubigung (AT) direkt übertragenen Schutzdatenwert vergleicht und verifiziert, ob das berechnete Siegel korrekt ist,

- 13) er die Beglaubigung akzeptiert, wenn der Vergleich zwischen dem übertragenen Schutzdatenwert und dem berechneten Schutzdatenwert positiv ist und wenn das berechnete Siegel korrekt ist.

7. Verfahren nach den Ansprüchen 5, 6, bei welchem eine Anzahl n von Antragstellersubjekten ($S_1$, $S_i$, $S_n$) vom Server (SAU) jeweils eine Beglaubigung ($AT_n$) verlangen, wobei n Beglaubigungen zu einem dritten Subjekt ($S_{n+1}$) übertragen werden, dadurch gekennzeichnet, daß

- bei der ersten Stufe das Subjekt $S_n$, das seinen eigenen Steuerdatenwert ($CL_n$) gewählt und vom Subjekt $S_{n-1}$ den vorhergehenden Steuerdatenwert ($CL_{n-1}$) empfan-

gen hat, einen Verkettungswert ($CV_n$) berechnet, der mit seinem eigenen Steuerdatenwert ($CL_n$) und mit dem Vorgänger ($CL_{n-1}$) über eine reversible Chiffrierfunktion $F_L$ verbunden ist, die seinen eigenen Steuerdatenwert als Chiffrierschlüssel verwendet und den Vorgänger als Eingangswert verwendet, worauf er dann zum Server (SAU) übertragen wird,

- bei der zweiten Stufe der Server zusätzlich den Verkettungswert ($CV_n$) in die Beglaubigung einführt, wobei die Berechnung des Siegels oder der Unterschrift auch letzteren berücksichtigt.

8. Verfahren nach Anspruch 7, dadurch gekennzeichnet, daß zum Verifizieren eine Gruppe von n Beglaubigungen das Subjekt $S_n$ der Anordnung n den letzten Steuerdatenwert $CL_{n-1}$ dechiffriert, dann die anderen Steuerdatenwerte der Kette von Beglaubigungen mit Hilfe von Verkettungswerten und der zur reversiblen Chiffrierfunktion inversen Dechiffrierfunktion berechnet.

SC

CPR
—— → | F |
CS

SE
SG

SE
SG

CPL
—— → | F⁻¹ |
CS

SC

$$\underline{\text{FIG.1}}$$

SY

demande
attestation

Ⓐ

① + Ⓐ → 

② + Ⓑ

SAU

③ + Ⓒ

S₁

④

⑤ → 

⑥ + ⑦ + ⑧

S₂

⑨

$$\underline{\text{FIG.2}}$$

Transmission
d'attestation

AT

SE
ouSG

$c_1$  $c_2$  $c_3$  $c_4$  $c_5$  $c_6$  $c_7$  $c_8$  $c_9$  $c_{10}$  $c_{11}$

$$\underline{\text{FIG.3}}$$

FIG.4

FIG.5